# EUROPEAN PATENT SPECIFICATION

(11) **EP 3 064 287 B1**
(45) Date of publication and mention of the grant of the patent: **13.09.2017**
(21) Application number: 16000489.1
(22) Date of filing: 01.03.2016
(51) Int. Cl.: B21D 19/04, F16L 9/02, B26D 3/16

(54) **MACHINE FOR PRE-FLANGING, EDGING AND FLANGING A SECTION OF PIPE WITH AN OBLIQUE END**
MASCHINE ZUM VORFLANSCHEN, EINFASSEN UND FLANSCHEN EINES ABSCHNITTS EINES ROHRES MIT EINEM SCHRÄGEN ROHRENDE
MACHINE POUR PRÉ-BRIDAGE, BORDURE ET BRIDAGE D'UN TRONÇON DE TUYAU AVEC UNE EXTRÉMITÉ OBLIQUE

(30) Priority: 02.03.2015 IT MI20150310
(43) Date of publication of application: 07.09.2016
(73) Proprietor: TTEngineering S.r.l., 22074 Lomazzo (CO) (IT)
(72) Inventor: PASQUETTIN, Claudio Antonio, 22074 Lomazzo (CO) (IT)
(74) Representative: Nemni, Raffaelo

(56) References cited:
- EP-B1- 1 341 622
- WO-A1-2011/141638

## Description

### OBJECT OF THE INVENTION

The object of the present invention is a machine for performing pre-flanging, edging, and flanging operations on sections of pipe with a thickness ranging from 0.4 to 0.8 mm and having at least one oblique end according to the preamble of claim 1 (see for example EP-B1-1 341 622).

### STATUS OF THE ART

Sections of pipe having at least one oblique end are used as fittings to realize bends in pipings. Such sections of pipe shall be welded as much accurately as possible for integrity of piping. In order to get an accurate welding, such sections of pipe shall be pre-flanged, edged, and flanged with correct dimensions and angles. The known machines used to perform such pre-flanging, edging, and flanging operations have a drawback in that they profile and roll the edge of said sections of pipe with inaccurate and incorrect dimensions and angles.

### DISCLOSURE OF THE INVENTION

The machine according to the present invention, which is defined in claim 1, solves the drawbacks of the known machines. Specifically the subject machine pre-flanges, edges, and flanges the subject sections of pipe having at least one oblique end and a thickness ranging from 0.4 to 0.8 mm.

In order to better understand the advantageous solution of a machine according to the present invention, the individual steps of the machining of the subject sections of pipe are illustrated.

The first step performs a flanging suitable for shaping the end of the sector so as to create a band featuring a tilt constant all along its perimeter.

The second step performs an edging cut of the end of the sector to properly prepare the point of welding to the corresponding sector.

The third step shapes the end of the sector so as to make the two ends of the sectors to be welded, mate.

The sector to be machined is loaded either manually or by using a robot onto a spindle featuring a tilt of 22° to 23°, preferably 22.5° to be able to form a finished bend at 45° or 90°, or a tilt of 15° to be able to form bends at 30° or 60°.

Said spindle holds the sector by friction, in the first step by way of springs so as to allow a sliding hence a positioning of the sector with a reference by way of an external leveling plate. In the subsequent step the workpiece is locked integrally with the spindle by way of a wedge expander.

During the cutting step, the generated scrap is held by a knurled rotary bush and by a sprung fork. Once the cutting step is over, the bush-fork assembly moves backward and lets said scrap fall onto a conveyor belt which evacuates it to outside the machine.

Flanging is performed by two rollers, one, having dimensions smaller than the other roller located inside the pipe, and the other, having greater dimensions, outside. In the horizontal flanging zone, the profile of the rollers has a tilt from 2° to 6° so as to guarantee a limited zone of contact of said rollers with that part of the section of pipe to be deformed, while minimizing the slipping due to the different peripheral speeds of said rollers.

The machine according to the present invention is suitable for producing sections of pipe with at least one tilted end with a thickness from 0.5mm to 0.8mm made of stainless steel, copper, and aluminum perfectly weldable by using TIG, micro plasma, or laser technology. The lower roller profiles the section of pipe externally with a radius of 0.3mm in order to guarantee a correct housing of the sectors being welded, and the combination of the tools from 2° to 6° guarantees a smooth process and prevents frictions hardened to 63 HRC, lapped to a roughness Ra 0.2 µm, coated by modified chromium nitride CrN, with a radius of 1.5 mm. Said roller goes ahead along with the bending of the edge and profiles and rolls the edge of pipe while imparting the correct dimensions and angles thereto.

### DESCRIPTION OF THE FIGURES

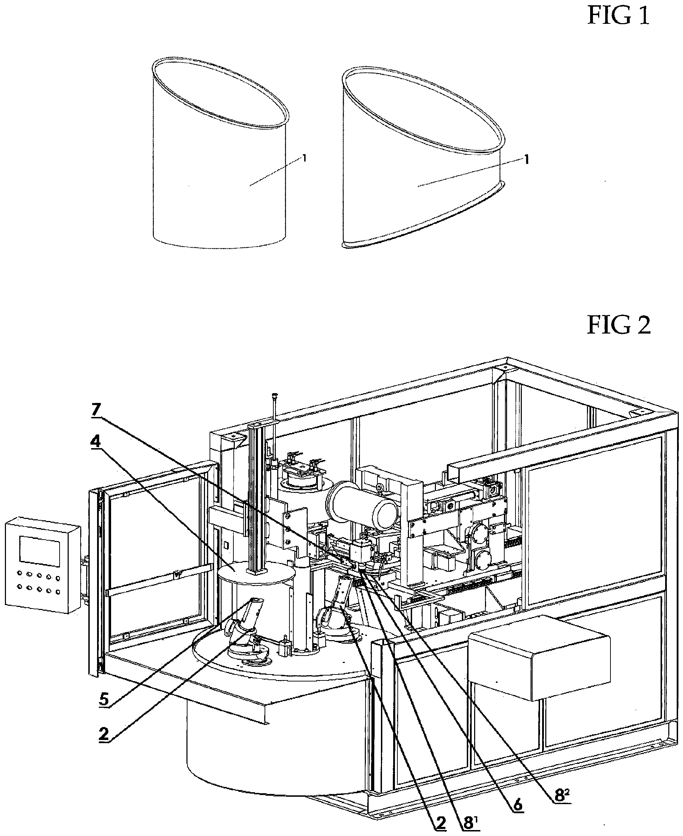

Figure 1 shows a tridimensional view of a section of pipe to be pre-flanged, edged, and flanged.
Figure 2 shows a tridimensional view of a preferred embodiment of a machine according to the present invention wherein two spindles (2) and a leveling plate (4) are shown. Said spindles (2) have a tilt of 22° to 23° or alternatively 15° and not all of the different tilts are graphically shown. Figure 2 also shows a wedge expander (5) and a knurled rotary bush (6), a sprung fork (7), and two rollers (81, 82) of the machine according to the present invention.

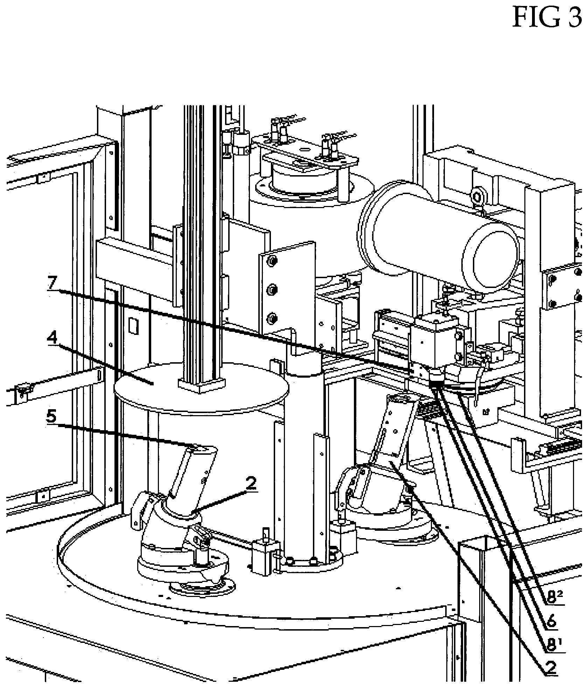

Figure 3 shows a tridimensional view of a machine according to a preferred embodiment of the present invention wherein two spindles (2) and a leveling plate (4) are shown in a more detailed manner, as well as a wedge expander (5) and a knurled rotary bush (6), a sprung fork (7), and two rollers (81, 82) of the machine according to the present invention.

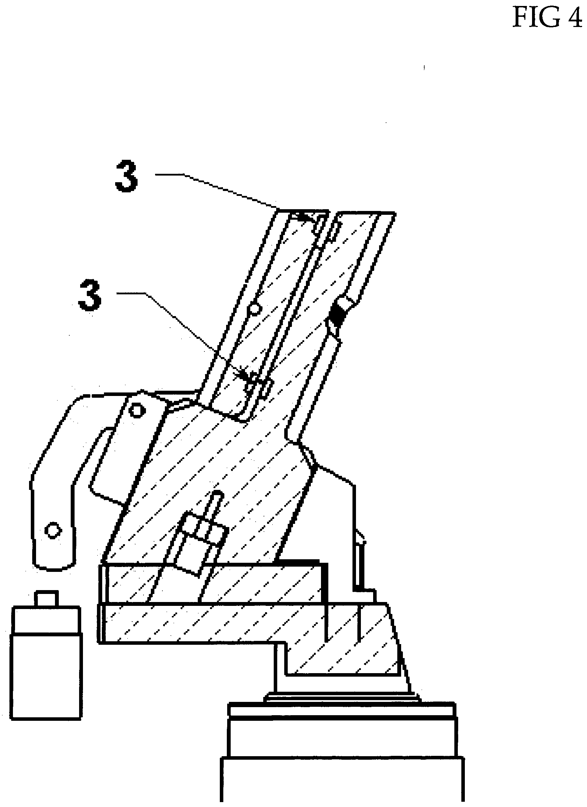

Figure 4 shows a bidimensional view of the spindle (2) wherein the position of two holding springs (3) is shown.

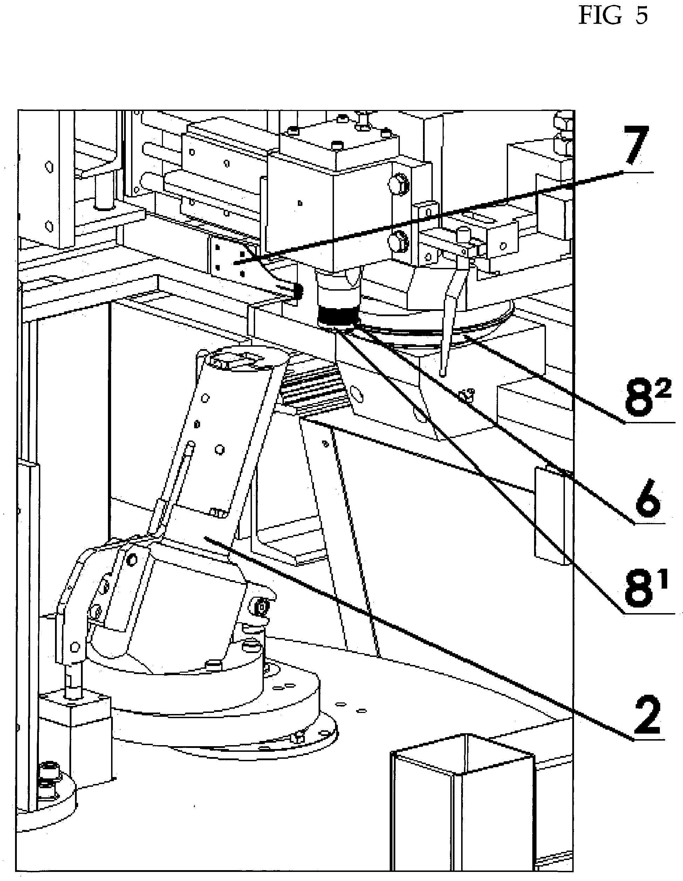

Figure 5 shows a tridimensional view of a machine according to a preferred embodiment of the present invention wherein a spindle (2), a knurled rotary bush (6), a sprung fork (7), and two rollers (8¹, 8²) tilted by 2° to 6° are shown in a more detailed manner.

## Claims

1. A machine for pre-flanging, edging, and flanging a section of pipe (1) featuring at least one oblique end, comprising at least two rollers (8¹,8²) able to perform the flanging of the section of the pipe (1), **characterized in that** it further comprises an inclined spindle (2) for holding a section of the pipe (1) by friction, at least one holding spring (3) for positioning the section of the pipe (1) with a reference by way of a leveling plate (4), a wedge expander able to lock the section of pipe (1) with the inclined spindle (2), a rotary bush (6) and a sprung fork (7) able to hold the scrub generated by the cutting of the section of the pipe (1).

2. A machine according to claim 1, **characterized in that** the spindle (2) has a tilt from 22° to 23° or of 15° alternatively.

3. A machine according to claim 1, **characterized in that** the rotary bush (6) is knurled.

4. A machine according to claim 1, **characterized in that** the two rollers (8¹, 8²) have different dimensions.

5. A machine according to claim 4, **characterized in that** the two rollers (8¹, 8²) have the upper or lower profile tilted by 2° to 6° alternatively.

6. A machine according to claim 5, **characterized in that** either roller (8¹,8²) is made of a high performance steel (HPS) hardened to 63 HRC.

7. A machine according to claim 5, **characterized in that** either roller (8¹,8²) is lapped to a roughness Ra 0.2 µm.

8. A machine according to claim 5, **characterized in that** either roller (8¹,8²) is coated by modified chromium nitride CrN with a radius of 1.5 mm.

## Patentansprüche

1. Eine Maschine zum Vorbördeln, Abgraten und Bördeln eines Rohrabschnitts (1) mit mindestens einem schrägen Ende, die mindestens zwei Walzen (8¹, 8²) umfasst und in der Lage ist, das Bördeln eines Rohrabschnittes auszuführen, **dahingehend gekennzeichnet, dass** sie überdies Folgendes umfasst: eine schräg stehende Spindel (2), um einen Rohrabschnitt (1) durch Reibung zu halten, mindestens eine Haltefeder (3), die den Rohrabschnitt (1) mit Hilfe eines Nivelliertellers (4) in eine Referenzposition bringt, einen Keilkonus, der den Rohrabschnitt (1) an der schräg stehenden Spindel (2) arretieren kann, eine Drehbuchse (6) und eine Federgabel (7), die den durch das Zuschneiden des Rohrabschnitts (1) entstehenden Abrieb aufnehmen kann.

2. Eine Maschine nach Anspruch 1, **dahingehend gekennzeichnet, dass** die Spindel (2) einen Neigungswinkel von 22° bis 23° oder alternativ von 15° aufweist.

3. Eine Maschine nach Anspruch 1, **dahingehend gekennzeichnet, dass** die Drehbuchse (6) gerändelt ist.

4. Eine Maschine nach Anspruch 19 **dahingehend gekennzeichnet, dass** die zwei Walzen (8¹, 8²) von unterschiedlicher Größe sind.

5. Eine Maschine nach Anspruch 4, **dahingehend gekennzeichnet, dass** die zwei Walzen (8¹, 8²) alternierend eine Neigung des oberen oder unteren Profils um zwischen 2° bis 6° aufweisen.

6. Eine Maschine nach Anspruch 5, **dahingehend gekennzeichnet, dass** jede der zwei Walzen (8¹, 8²) aus einem auf 63 HRC gehärteten Hochleistungsstahl (HPS) gefertigt ist.

7. Eine Maschine nach Anspruch 5, **dahingehend gekennzeichnet, dass** jede der zwei Walzen (8¹, 8²) auf einen Rauwert von Ra 0,2 µm geläppt ist.

8. Eine Maschine nach Anspruch 5, **dahingehend gekennzeichnet, dass** jede der zwei Walzen (8¹, 8²) mit modifiziertem Chrom-Nitrid CrN mit einem Radius von 1,5 mm beschichtet ist.

## Revendications

1. Une machine de pré-bordage, de bridage et de bordage d'une section de tube (1) présentant au moins une extrémité oblique, comprenant au moins deux rouleaux (8¹, 8²) aptes à effectuer le bordage de la section du tuyau (1), **caractérisée par le fait qu'**elle inclut en outre une broche inclinée (2) pour maintenir une section du tube (1) par friction, au moins un ressort de maintien (3) pour positionner la section du tube (1) avec une référence par voie d'une plaque de nivellement (4), un étendeur de joint tronconique pouvant verrouiller la section de tube (1) avec la broche inclinée (2), une garniture d'étanchéité rotative (6) et une fourche à ressort (7) apte à contenir le frottement généré par la coupe de la section du tube (1).

2. Une machine, conformément à la revendication 1, **caractérisée par le fait que** la broche (2) a une inclinaison de 22° à 23° ou, autrement, de 15°.

3. Une machine, conformément à la revendication 1, **caractérisée par le fait que** la douille d'étanchéité rotative (6) est moletée.

4. Une machine, conformément à la revendication 1, **caractérisée par le fait que** les deux rouleaux (81, 82) sont de dimensions différentes.

5. Une machine, conformément à la revendication 4, **caractérisée par le fait que** les deux rouleaux (8¹, 8²) ont les profils supérieurs et inférieurs inclinés alternativement de 2° à 6°.

6. Une machine, conformément à la revendication 5, **caractérisée par le fait que** les deux rouleaux (8¹, 8²) sont en acier hautes performances (HPS) durci à 63 HRC.

7. Une machine, conformément à la revendication 5, **caractérisée par le fait que** les deux rouleaux (8¹, 8²) sont rodés jusqu'à une rugosité Ra 0,2 µm.

8. Une machine, conformément à la revendication 5, **caractérisée par le fait que** les deux rouleaux (8¹, 8²) sont recouverts de nitrure de chrome CrN modifié, avec un rayon de 1,5 mm.
